# FASCICULE DE BREVET EUROPEEN

(11) **EP 3 108 958 B1**
(45) Date de publication et mention de la délivrance du brevet: **20.12.2017**
(21) Numéro de dépôt: 16175170.6
(22) Date de dépôt: 20.06.2016
(51) Int. Cl.: B01J 8/00

(54) **PROCÉDÉ DE VIDANGE COMPLÈTE D'UN RÉACTEUR CATALYTIQUE**
VERFAHREN ZUR VOLLKOMMENEN ENTLEERUNG EINES KATALYTISCHEN REAKTORS
METHOD FOR COMPLETE DRAINING OF A CATALYTIC REACTOR

(30) Priorité: 26.06.2015 FR 1555946
(43) Date de publication de la demande: 28.12.2016
(73) Titulaire: Eurecat S.A., 07800 La Voulte-sur-Rhône (FR)
(72) Inventeur: DARCISSAC, Jean, 07800 SAINT GEORGES LES BAINS (FR); THEVENET, Vincent, 26400 ALLEX (FR); VIAL, Romain, 69390 VERNAISON (FR); BERNARD, Lilian, 26200 MONTELIMAR (FR); DUFRESNE, Pierre, 26400 AOUSTE SUR SYE (FR)
(74) Mandataire: Casalonga

(56) Documents cités:
- WO-A1-94/20396
- WO-A1-2004/058572
- US-B1- 6 203 766
- US-B2- 7 959 870

## Description

La présente invention a pour objet un procédé qui permet de vidanger de manière complète un réacteur contenant des particules de catalyseur.

Le procédé selon l'invention est tout particulièrement approprié pour vider complètement un réacteur industriel des particules de catalyseur usé qu'il contient.

De nombreux procédés industriels notamment dans les domaines de la chimie, de la pétrochimie et du raffinage pétrolier, mettent en oeuvre des catalyseurs solides sous forme de particules de petite taille.

Ces particules de catalyseur sont en général disposées dans le réacteur sous forme d'un ou plusieurs lits (ou couches de catalyseurs) superposés, déposés chacun sur un plateau de support.

Au cours de son utilisation dans le réacteur, le catalyseur se désactive progressivement, et son activité diminue, de telle sorte qu'il doit être retiré du réacteur pour être remplacé par un nouveau catalyseur actif. Ainsi, les réacteurs industriels doivent être régulièrement arrêtés pour renouveler le ou les lits de catalyseur. Cette opération se déroule en deux temps : la vidange du réacteur de manière à en retirer le catalyseur usé, puis son rechargement en catalyseur actif. Ces deux opérations doivent être réalisées de manière la plus efficace et rapide possible, de manière à diminuer au maximum le temps d'arrêt du réacteur, pour des raisons économiques évidentes.

En outre, l'opération de vidange doit être complète, pour éliminer entièrement du réacteur l'intégralité du catalyseur usé. En effet, une vidange incomplète conduirait à laisser subsister du catalyseur usé dans le réacteur, au détriment du catalyseur actif, ce qui serait particulièrement préjudiciable au rendement de l'unité et n'est en pratique pas acceptable.

Toutefois, la vidange complète d'un réacteur industriel des particules de catalyseur usé qu'il contient est une opération délicate et problématique, pour diverses raisons.

En premier lieu, les particules de catalyseur usé ont tendance à être collantes et à s'agglomérer de manière plus ou moins forte les unes aux autres, ce qui complique substantiellement leur évacuation hors du réacteur.

En second lieu, le catalyseur usé contient souvent une phase active qui peut être réactive au contact de l'air, telle que par exemple les phases actives contenant des sulfures métalliques. En raison de la présence de ces composés, le catalyseur usé peut s'échauffer spontanément de manière busque et importante, voire dans certains cas s'auto-enflammer au contact de l'air. La plupart des catalyseurs correspondants sont classifiés, selon une norme des Nations Unies, soit comme auto-échauffants, soit comme pyrophoriques.

La manipulation du catalyseur usé est donc délicate et peut être dangereuse, et la vidange du réacteur est généralement effectuée sous atmosphère inerte (le plus souvent de l'azote).

Pour vider un réacteur contenant des particules de catalyseur usées, plusieurs techniques sont connues dans l'art antérieur :

### - La vidange gravitaire :

Celle-ci s'effectue en ouvrant le ou les tubes de vidange latéraux situés en bas du réacteur (ou en bas de chaque lit de catalyseur pour un réacteur à plusieurs lits), de manière à permettre au catalyseur de s'écouler hors du réacteur sous l'action de son poids. Ceci permet dans les cas les plus favorables d'extraire 80 à 85 % du catalyseur usé contenu dans le réacteur.

Mais le catalyseur peut aussi être collant et mal s'écouler voire ne pas s'écouler du tout notamment lorsque des agglomérats de catalyseur usé se sont formés. Dans ce cas, il est nécessaire de recourir à différentes techniques de décolmatage du lit pour enclencher l'écoulement des particules de catalyseur.

Dans tous les cas, même les plus favorables, à la fin de l'opération de vidange gravitaire il reste dans le réacteur une quantité de catalyseur usé qui représente en général de 15 à 20 % en poids du lit de catalyseur initial, et qui correspond typiquement à l'angle naturel de talus de ce solide divisé. Ce reliquat de catalyseur dans le réacteur à la fin de la vidange gravitaire est communément appelé « dig out ».

Une intervention humaine est alors nécessaire pour évacuer le dig out: un opérateur descend dans le réacteur et évacue manuellement ce reliquat, par exemple avec une pelle, vers le tube de vidange. Cette opération présente un danger particulièrement important : le réacteur est sous azote, compte tenu du caractère auto-échauffant du catalyseur usé, et régulièrement des accidents mortels surviennent lors de ces opérations. Les industriels souhaitent donc aujourd'hui limiter, voire supprimer complètement, de telles interventions humaines à l'intérieur des réacteurs.

### - La vidange par aspiration :

Celle-ci s'effectue en général par le haut du réacteur. Le haut du réacteur est ouvert, sous balayage d'azote, le plateau distributeur de charge généralement présent au-dessus du lit est démonté, et le lit catalytique est aspiré au moyen d'un aspirateur industriel avec compensation d'azote.

La tête de l'aspirateur est généralement guidée par un opérateur pour vidanger le catalyseur couche par couche. Le solide et le gaz sont séparés via un cyclone. Cette technique, largement utilisée, présente divers inconvénients : un coût élevé ; une détérioration des particules de catalyseur, allant parfois jusqu'à ne pas permettre la régénération de celui-ci pour son utilisation ultérieure ; la présence dans le réacteur d'un opérateur, au moins pour les opérations de finition, ce qui engendre des problèmes de sécurité tels que décrits ci-avant.

Des exemples de ce type de technique sont décrits dans les documents US 7,959,870 et WO 2004/058572.

### - La vidange gravitaire sous eau :

Cette technique, plutôt expérimentale et moins couramment employée, permet d'éviter toute intervention humaine dans le réacteur sous atmosphère inerte. Elle consiste à remplir le réacteur d'eau et vidanger le mélange catalyseur/eau via les tubes de vidange latéraux situés en bas du réacteur.

Elle présente toutefois des inconvénients majeurs : elle génère beaucoup d'eau sale, et compromet la possibilité de régénérer ensuite le catalyseur usé en vue de sa réutilisation.

Il existe donc depuis longtemps un besoin important de disposer de solutions innovantes qui permettent de vider de manière complète, rapide, efficace et sûre, les réacteurs industriels des particules de catalyseur usé qu'ils contiennent.

La Demanderesse a maintenant découvert une nouvelle technique de vidange des réacteurs contenant des particules de catalyseur usé, qui permet de remédier aux inconvénients des méthodes de l'art antérieur.

La présente invention a pour objet un procédé pour vidanger un réacteur contenant au moins un lit de particules de catalyseur usé et qui comprend au moins un tube de vidange, qui débouche dans le réacteur en partie basse dudit lit de particules ou en dessous de celui-ci. Le procédé selon l'invention comprend les étapes successives suivantes :
- une première étape consistant à provoquer l'écoulement hors du réacteur d'une partie du lit de catalyseur via ledit tube de vidange, puis
- une seconde étape d'expulsion hors du réacteur du reliquat de catalyseur, effectuée en chassant vers l'ouverture du tube de vidange les particules de catalyseur restant dans le réacteur à l'issue de la première étape, au moyen d'un dispositif amovible comprenant au moins une brosse rotative fixée à l'extrémité d'un bras articulé introduit dans le réacteur via ledit tube de vidange.

La méthode selon l'invention permet de vider de manière particulièrement complète, efficace et rapide le réacteur de son chargement de catalyseur usé.

La méthode selon l'invention permet en outre d'éviter toute intervention humaine à l'intérieur du réacteur, et permet d'améliorer de manière très importante la sécurité des opérations de déchargement du catalyseur usé.

La méthode selon l'invention permet enfin de préserver les propriétés du catalyseur usé, et de limiter son endommagement lors de son déchargement, ce qui est essentiel lorsque le catalyseur doit ensuite être régénéré en vue d'une utilisation ultérieure.

La première étape de la méthode selon l'invention consiste à provoquer l'écoulement d'une partie de lit de catalyseur hors du réacteur au travers du tube de vidange, en ouvrant celui-ci.

Cette première étape est de préférence effectuée de manière gravitaire, c'est-à-dire en provoquant l'écoulement gravitaire hors du réacteur d'une partie du lit de catalyseur via ledit tube de vidange.

Par « écoulement gravitaire », on entend que le catalyseur s'écoule du réacteur au cours de la première étape sous l'action de son propre poids, et n'est ni poussé par des moyens mécaniques de poussée à l'intérieur du réacteur (par exemple, par un opérateur), ni aspiré hors du réacteur par des moyens d'aspiration des particules.

Il s'agit typiquement d'un écoulement gravitaire classique, tel que ceux connus dans l'art antérieur.

L'écoulement peut également être assisté, c'est-à-dire qu'au cours de la première étape sont mis en oeuvre des moyens permettant de faciliter la sortie du catalyseur hors du réacteur, par exemple au moyen d'injection dans le réacteur de gaz sous pression.

Par ailleurs, notamment dans les cas où l'écoulement de catalyseur ne se produit pas spontanément lors de l'ouverture du tube de vidange, l'on peut, immédiatement avant la première étape, recourir à des moyens de désagglomération du lit de catalyseur. De tels moyens sont connus dans l'art antérieur. Il peut d'agir en particulier d'une injection de gaz sous pression (typiquement, du CO₂ sous pression). Ces moyens permettent de faire démarrer l'écoulement des particules de catalyseur, après quoi le catalyseur, dans le cas d'un écoulement gravitaire, est laissé s'écouler sous la seule action de son poids.

Ainsi, selon un mode de réalisation de l'invention, ladite première étape est précédée d'une étape préliminaire de désagglomération du catalyseur, qui est de préférence réalisée en injectant dans le lit de catalyseur un gaz inerte sous pression tel que du dioxyde de carbone ou de l'azote.

La présente invention s'applique aux réacteurs qui sont pourvus d'au moins un tube de vidange, qui débouche dans le réacteur en partie basse du lit de particules ou en dessous de celui-ci.

Le tube de vidange peut être horizontal, ou incliné vers le bas. De préférence, il est incliné vers le bas. Dans ce cas, le tube de vidange présente de préférence un angle d'inclinaison par rapport à la verticale allant de 0 à 75 degrés, plus préférentiellement 10 à 60 degrés.

Au cours de la première étape du procédé selon l'invention une partie généralement substantielle du lit de catalyseur usé est extraite du réacteur, typiquement supérieure à 50% en poids du lit initial, et en général allant de 60 à 95% en poids du lit initial de catalyseur, plus particulièrement de 70 à 90% en poids du lit initial de catalyseur.

Le reliquat de catalyseur (ou « dig out ») est ensuite éliminé complètement du réacteur au moyen de la seconde étape du procédé de l'invention.

Cette seconde étape met en oeuvre un dispositif amovible comprenant une brosse rotative fixée à l'extrémité d'un bras articulé introduit dans le réacteur via ledit tube de vidange. Cette brosse tourne autour d'un axe de préférence orientable, à une vitesse qui peut être variable.

Cette brosse rotative permet de chasser le reliquat de catalyseur vers l'ouverture du tube de vidange, c'est-à-dire, vers l'extrémité du tube de vidange débouchant dans le réacteur.

Ainsi, au cours de cette seconde étape, le reliquat de catalyseur usé est totalement expulsé du réacteur via le tube de vidange.

Selon la présente invention, la brosse rotative est fixée à l'extrémité d'un bras articulé introduit dans le réacteur via le tube de vidange, ce qui permet de déplacer la brosse dans toutes les directions possibles à l'intérieur du réacteur (au moins trois degrés de liberté en translation et/ou en rotation dans les déplacements de la brosse).

Le bras articulé permet d'introduire et de déplacer la brosse à l'intérieur du réacteur. Selon un mode de réalisation, le bras articulé est télescopique.

Le bras articulé est amovible, et transportable. Pour la mise en oeuvre de la seconde étape, il est avantageusement fixé sur le tube de vidange.

Les déplacements de la brosse dans le réacteur peuvent être contrôlés par des moyens de guidage du bras articulé. Des moyens de guidage appropriés peuvent être par exemple constitués d'un ensemble de moteurs.

Ces moyens de guidage peuvent être pilotés de manière manuelle, automatique ou semi-automatique.

Lorsque le pilotage des moyens de guidage du bras articulé est manuel, un opérateur à l'extérieur du réacteur contrôle les déplacements de la brosse à l'intérieur du réacteur en actionnant ces moyens de guidage.

Lorsque le pilotage des moyens de guidage du bras articulé est automatique, les moyens de guidage sont contrôlés par un ordinateur qui exécute un programme de déplacement de la brosse à l'intérieur du réacteur. Le programme de déplacement peut être prédéfini, c'est-à-dire que les déplacements de la brosse au cours de la seconde étape ont été calculés au préalable, de manière à optimiser l'évacuation du « dig out ». Le programme de déplacement peut également être conçu de manière à organiser un déplacement aléatoire de la brosse à l'intérieur du réacteur.

Le pilotage des moyens de guidage du bras articulé peut également être semi-automatique, c'est-à-dire contrôlé en partie via un programme d'ordinateur, et en partie par un opérateur.

En outre, selon un mode de réalisation particulièrement avantageux de l'invention, des moyens de détection de la position de la brosse sont présents dans le réacteur. De tels moyens permettent de connaître à tout moment la position exacte de la brosse dans le réacteur, et le cas échéant, d'optimiser ses déplacements.

Ces moyens de détection peuvent comprendre un logiciel de calcul, qui détermine au fur et à mesure la position de la brosse dans le réacteur compte tenu des déplacements du bras articulé (simulation de la position de la brosse via un logiciel compilant les données de pilotage pour en déduire la position).

D'autres moyens de détection incluent par exemple des systèmes de détection par niveau radar ou par niveau à ultrasons ; des systèmes mettant en oeuvre un ou plusieurs accéléromètres, un ou plusieurs GPS ; des systèmes de vision par une ou plusieurs caméras.

Selon un mode de réalisation préféré, lesdits moyens de détection comprennent une ou plusieurs caméra(s), qui permet(tent) de visualiser la position de la brosse dans le réacteur. Une telle caméra peut être par exemple positionnée sur la paroi interne du réacteur et/ou sur le bras articulé. Divers types de caméras peuvent être employés à cet effet, incluant notamment des caméras à vision nocturne, des caméras infrarouges.

Une telle caméra peut en outre permettre si besoin de localiser les reliquats de catalyseur, et de piloter en conséquence les déplacements de la brosse.

La brosse employée dans la présente invention comprend avantageusement un ensemble de filaments (ou poils), de fléaux ou encore de lanières, fixés sur un support, et qui peuvent être plus ou moins rigides, de préférence relativement rigides. La brosse peut également être constituée d'une chaîne fixée sur un support.

La brosse peut être constituée de tout matériau approprié, tels que par exemple et de manière non limitative des matériaux polymériques, des matériaux métalliques (par exemple de l'acier inoxydable), des composites et des mélanges de tels matériaux.

La brosse peut avoir des formes et tailles relativement diverses. De préférence, elle est de forme cylindrique.

En tournant, la brosse frotte la surface du reliquat de catalyseur (dig out), permet le décrochage des particules et leur expulsion vers l'ouverture du tube de vidange.

Selon l'invention, la brosse est rotative, c'est-à-dire qu'elle tourne autour d'un axe. L'axe de rotation de la brosse peut être fixe ou orientable. Il peut être orientable notamment en rotation autour de l'axe de la partie du bras articulé à laquelle la brosse est fixée. Ceci permet de contrôler la position de l'axe de rotation de la brosse, et d'ajuster celle-ci de manière à ce que cet axe soit le moins possible parallèle à l'axe du tube de vidange, ce qui aurait pour effet de chasser les particules de catalyseur en direction des parois latérales du réacteur et non pas vers l'ouverture du tube de vidange.

La vitesse de rotation de la brosse peut être fixe ou variable. De préférence, elle est variable, ce qui permet de la faire varier au fur et à mesure de l'avancement de la deuxième étape. La vitesse de rotation de la brosse peut également être ajustée compte tenu de la taille des particules de catalyseur, et de leur caractère plus ou moins aggloméré.

Dans le cas où le réacteur comprend plusieurs lits de catalyseur, chaque lit peut être vidangé au moyen de la méthode selon l'invention. Cela nécessite la présence sur le réacteur d'au moins un tube de vidange au bas de chaque lit de catalyseur.

Lorsque le catalyseur usé à retirer du réacteur est réactif à l'air, par exemple lorsqu'il possède un caractère auto-échauffant, le procédé selon la présente invention est typiquement effectué en mettant puis en maintenant le réacteur sous gaz inerte, c'est-à-dire que le catalyseur qui est retiré du réacteur au cours des deux étapes selon l'invention est progressivement remplacé par un gaz inerte, tel que par exemple de l'azote. Cette introduction de gaz inerte dans le réacteur au fur et à mesure de la vidange de celui-ci, peut être effectuée par exemple par le haut ou par le bas du réacteur.

La présente invention va maintenant être illustrée plus en détail et de manière non limitative, à l'aide des figures annexées dans lesquelles :
- la Figure 1 illustre la mise en oeuvre de la première étape du procédé selon l'invention dans un réacteur industriel contenant un lit de catalyseur usé,
- la Figure 2 montre le même réacteur, à l'issue de la première étape,
- la Figure 3 illustre la mise en oeuvre de la seconde étape du procédé selon l'invention, dans le même réacteur.

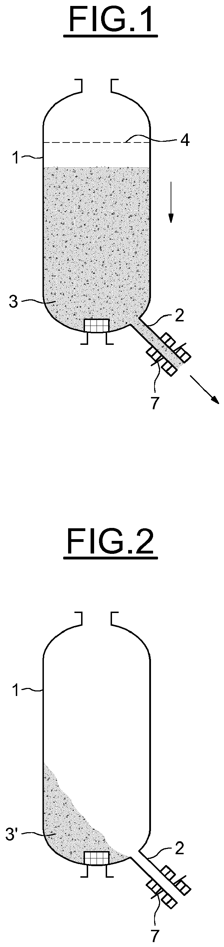

La Figure 1 montre un réacteur industriel 1 du type des colonnes, contenant un lit 3 de particules de catalyseur usé. Le réacteur 1 comprend un tube de vidange 2 incliné vers le bas, avec un angle d'inclinaison par rapport à la verticale d'environ 45 degrés. Le tube 2 débouche dans le réacteur 1 en partie basse du lit 3 de particules.

Pour permettre la mise en oeuvre de la première étape du procédé selon l'invention, le tube de vidange 2 a été ouvert en ouvrant la vanne de vidange 7, de telle sorte que les particules de catalyseur s'écoulent hors du réacteur 1 par écoulement gravitaire, via le tube 2.

Les pointillés 4 montrent le niveau supérieur initial du lit de catalyseur 3 avant le déclenchement de l'écoulement gravitaire, et les flèches sur la Figure 1 montrent le sens de l'écoulement du catalyseur.

La Figure 2 illustre le même réacteur 1 à la fin de la première étape de vidange gravitaire, et montre qu'à l'issue de cette étape il reste dans le réacteur 1 un reliquat 3' de catalyseur usé qui représente ici environ 15% en poids du lit de catalyseur initial, et qui correspond à l'angle naturel de talus de l'amas de particules de catalyseur. Le reliquat 3' de catalyseur correspond au « dig out » qui ne peut pas être éliminé par simple vidange gravitaire.

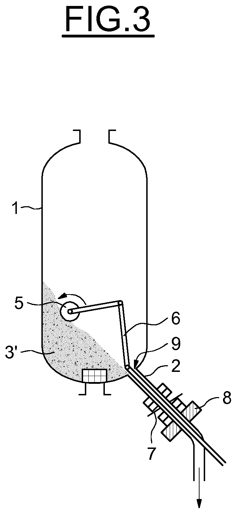

Comme illustré dans la Figure 3, conformément à la seconde étape du procédé selon l'invention, le reliquat 3' de catalyseur est ensuite expulsé hors du réacteur 1 au moyen d'un dispositif amovible comprenant une brosse rotative 5, qui en tournant chasse les grains de catalyseur vers l'ouverture 9 du tube 2. Dans le mode de réalisation illustré, cette brosse possède la forme d'un cylindre plat. La brosse 5 est fixée à l'extrémité d'un bras articulé 6 introduit dans le réacteur 1 via le tube de vidange 2.

Le bras articulé 6 permet de déplacer la brosse 5 dans toutes les directions possibles à l'intérieur du réacteur 1.

Les déplacements de la brosse 5 dans le réacteur 1 sont contrôlés par des moyens motorisés 8 de guidage du bras articulé, qui sont présents à l'extérieur du réacteur et sont fixés sur la bride en sortie du tube de vidange 2.

## Revendications

1. Procédé pour vidanger un réacteur (1) contenant au moins un lit (3) de particules de catalyseur usé et comprenant au moins un tube de vidange (2), qui débouche dans le réacteur (1) en partie basse dudit lit (3) de particules ou en dessous de celui-ci, le procédé comprenant les étapes successives suivantes :
- une première étape consistant à provoquer l'écoulement hors du réacteur d'une partie du lit (3) de catalyseur via ledit tube de vidange (2), puis
- une seconde étape d'expulsion hors du réacteur (1) du reliquat (3') de catalyseur, effectuée en chassant vers l'ouverture (9) du tube de vidange (2) les particules de catalyseur restant dans le réacteur à l'issue de la première étape, au moyen d'un dispositif amovible comprenant au moins une brosse rotative (5) fixée à l'extrémité d'un bras articulé (6) introduit dans le réacteur (1) via ledit tube de vidange (2).

2. Procédé selon la revendication 1, **caractérisé en ce que** la première étape est effectuée de manière gravitaire, en provoquant l'écoulement gravitaire hors du réacteur d'une partie du lit (3) de catalyseur via ledit tube de vidange (2).

3. Procédé selon l'une quelconque des revendications précédentes, **caractérisé en ce que** au cours de la première étape, la partie du lit (3) de catalyseur usé extraite du réacteur est supérieure à 50% en poids du lit initial, de préférence va de 60 à 95% en poids du lit de catalyseur initial, plus préférentiellement de 70 à 90% en poids du lit de catalyseur initial.

4. Procédé selon l'une quelconque des revendications précédentes, **caractérisé en ce que** au cours de la seconde étape les déplacements de la brosse (5) dans le réacteur (1) sont contrôlés par des moyens (8) de guidage du bras articulé (6), de préférence présents à l'extérieur du réacteur (1).

5. Procédé selon l'une quelconque des revendications précédentes, **caractérisé en ce que** le bras articulé (6) est télescopique.

6. Procédé selon la revendication précédente, **caractérisé en ce que** les moyens (8) de guidage du bras articulé (6) sont pilotés de manière manuelle, automatique ou semi-automatique.

7. Procédé selon l'une quelconque des revendications précédentes, **caractérisé en ce que** des moyens de détection de la position de la brosse (5) sont présents dans le réacteur.

8. Procédé selon la revendication précédente, **caractérisé en ce que** lesdits moyens de détection comprennent une ou plusieurs caméra(s), positionnée(s) sur la paroi interne du réacteur (1) et/ou sur le bras articulé (6).

9. Procédé selon l'une quelconque des revendications précédentes, **caractérisé en ce que** la brosse rotative (5) est de forme cylindrique.

10. Procédé selon l'une quelconque des revendications précédentes, **caractérisé en ce que** l'axe de rotation de la brosse (5) est fixe ou orientable, et de préférence orientable.

11. Procédé selon l'une quelconque des revendications précédentes, **caractérisé en ce que** le tube de vidange (2) est horizontal ou incliné vers le bas.

12. Procédé selon la revendication précédente, **caractérisé en ce que** le tube de vidange (2) est incliné vers le bas, avec un angle d'inclinaison par rapport à la verticale allant préférentiellement de 0 à 75 degrés, plus préférentiellement 10 à 60 degrés.

13. Procédé selon l'une quelconque des revendications précédentes, **caractérisé en ce que** ladite première étape est précédée d'une étape préliminaire de désagglomération du catalyseur, réalisée en injectant dans le lit de catalyseur (3) un gaz inerte sous pression tel que du dioxyde de carbone ou de l'azote.

## Patentansprüche

1. Verfahren zum Entleeren eines Reaktors (1), der mindestens ein Bett (3) aus verbrauchten Katalysatorpartikeln enthält und mindestens ein Entleerungsrohr (2) umfasst, das in den Reaktor (1) im unteren Teil des Betts (3) aus Partikeln oder unter diesem mündet, wobei das Verfahren die folgenden aufeinander folgenden Schritte umfasst:
- einen ersten Schritt, der darin besteht, das Abfließen eines Teils des Katalysatorbetts (3) über das Entleerungsrohr (2) aus dem Reaktor zu bewirken, dann
- einen zweiten Schritt des Räumens des Überrestes (3') des Katalysators aus dem Reaktor (1), das dadurch erfolgt, dass die nach dem ersten Schritt im Reaktor verbliebenen Katalysatorpartikel zur Öffnung (9) des Entleerungsrohrs (2) hin getrieben werden mittels einer lösbaren Vorrichtung, die mindestens eine drehende Bürste (5) umfasst, die am Ende eines Gelenkarms (6) befestigt ist, der über das Entleerungsrohr (2) in den Reaktor (1) eingeführt wird.

2. Verfahren nach Anspruch 1, **dadurch gekennzeichnet, dass** der erste Schritt schwerkraftmäßig erfolgt, indem das schwerkraftmäßige Abfließen eines Teils des Katalysatorbetts (3) über das Entleerungsrohr (2) aus dem Reaktor bewirkt wird.

3. Verfahren nach einem der vorhergehenden Ansprüche, **dadurch gekennzeichnet, dass** während des ersten Schritts der Teil des verbrauchten Katalysatorbetts (3), der aus dem Reaktor entnommen wird, mehr als 50 Gew.-% des Ausgangsbetts, bevorzugt 60 bis 95 Gew.-% des Ausgangskatalysatorbetts und noch bevorzugter 70 bis 90 Gew.-% des Ausgangskatalysatorbetts beträgt.

4. Verfahren nach einem der vorhergehenden Ansprüche, **dadurch gekennzeichnet, dass** während des zweiten Schritts die Bewegungen der Bürste (5) im Reaktor (1) über Mittel (8) zum Führen des Gelenkarms (6) gesteuert werden, die bevorzugt außerhalb des Reaktors (1) vorhanden sind.

5. Verfahren nach einem der vorhergehenden Ansprüche, **dadurch gekennzeichnet, dass** der Gelenkarm (6) teleskopisch ist.

6. Verfahren nach dem vorhergehenden Anspruch, **dadurch gekennzeichnet, dass** die Mittel (8) zum Führen des Gelenkarms (6) manuell, automatisch oder halbautomatisch angesteuert werden.

7. Verfahren nach einem der vorhergehenden Ansprüche, **dadurch gekennzeichnet, dass** im Reaktor Mittel zum Detektieren der Position der Bürste (5) vorhanden sind.

8. Verfahren nach dem vorhergehenden Anspruch, **dadurch gekennzeichnet, dass** die Mittel zum Detektieren eine oder mehrere Kameras umfassen, die an der Innenwand des Reaktors (1) und/oder am Gelenkarm (6) angeordnet sind.

9. Verfahren nach einem der vorhergehenden Ansprüche, **dadurch gekennzeichnet, dass** die drehende Bürste (5) zylindrisch ist.

10. Verfahren nach einem der vorhergehenden Ansprüche, **dadurch gekennzeichnet, dass** die Drehachse der Bürste (5) fest oder ausrichtbar und bevorzugt ausrichtbar ist.

11. Verfahren nach einem der vorhergehenden Ansprüche, **dadurch gekennzeichnet, dass** das Entleerungsrohr (2) horizontal oder nach unten geneigt ist.

12. Verfahren nach dem vorhergehenden Anspruch, **dadurch gekennzeichnet, dass** das Entleerungsrohr (2) nach unten geneigt ist, mit einem Neigungswinkel in Bezug auf die Vertikale von bevorzugt 0 bis 75 Grad und noch bevorzugter 10 bis 60 Grad.

13. Verfahren nach einem der vorhergehenden Ansprüche, **dadurch gekennzeichnet, dass** dem ersten Schritt ein Vorabschritt zur Deagglomeration des Katalysators vorausgeht, der ausgeführt wird, indem in das Katalysatorbett (3) ein Inertgas wie Kohlendioxid oder Stickstoff unter Druck eingespritzt wird.

## Claims

1. Method for emptying a reactor (1) containing at least one bed (3) of spent catalyst particles and comprising at least one dump tube (2), which opens into the reactor (1) at the bottom of the said bed (3) of particles or underneath the latter, the method comprising the following successive steps:
- a first step consisting in causing a proportion of the bed (3) of catalyst to flow out of the reactor via the said dump tube (2), then
- a second step of expelling the vestiges (3') of catalyst from the reactor (1), this step being performed by driving towards the opening (9) of the dump tube (2) the particles of catalyst that have remained in the reactor at the end of the first step, using a removable device comprising at least one rotary brush (5) fixed to the end of an articulated arm (6) introduced into the reactor (1) via the said dump tube (2).

2. Method according to Claim 1, **characterized in that** the first step is performed under gravity, by causing a proportion of the bed (3) of catalyst to flow out of the reactor under gravity via the said dump tube (2).

3. Method according to either one of the preceding claims, **characterized in that** during the course of the first step, the proportion of the bed (3) of spent catalyst extracted from the reactor is greater than 50 wt% of the initial bed and preferably ranges from 60 to 95 wt% of the initial catalyst bed, more preferentially from 70 to 90 wt% of the initial catalyst bed.

4. Method according to any one of the preceding claims, **characterized in that**, during the course of the second step, the movements of the brush (5) inside the reactor (1) are controlled by means (8) of guiding the articulated arm (6), which means are preferably present outside the reactor (1).

5. Method according to any one of the preceding claims, **characterized in that** the articulated arm (6) is telescopic.

6. Method according to the preceding claim, **characterized in that** the means (8) of guiding the articulated arm (6) are controlled manually, automatically or semiautomatically.

7. Method according to any one of the preceding claims, **characterized in that** means of detecting the position of the brush (5) are present inside the reactor.

8. Method according to the preceding claim, **characterized in that** said detection means comprise one or more camera(s) positioned on the internal wall of the reactor (1) and/or on the articulated arm (6).

9. Method according to any one of the preceding claims, **characterized in that** the rotary brush (5) is of cylindrical shape.

10. Method according to any one of the preceding claims, **characterized in that** the axis of rotation of the brush (5) is fixed or orientable, and preferably orientable.

11. Method according to any one of the preceding claims, **characterized in that** the dump tube (2) is horizontal or inclined downwards.

12. Method according to the preceding claim, **characterized in that** the dump tube (2) is inclined downwards, with an angle of inclination with respect to the vertical ranging preferably from 0 to 75 degrees, more preferably 10 to 60 degrees.

13. Method according to any one of the preceding claims, **characterized in that** the said first step is preceded by a preliminary step of deagglomerating the catalyst, performed by injecting a pressurized inert gas such as carbon dioxide or nitrogen into the bed of catalyst (3).
